# EUROPÄISCHE PATENTSCHRIFT

(11) **EP 2 712 467 B1**
(45) Veröffentlichungstag und Bekanntmachung des Hinweises auf die Patenterteilung: **31.01.2018**
(21) Anmeldenummer: 12758437.3
(22) Anmeldetag: 03.09.2012
(51) Int. Cl.: H01M 4/38, H01M 4/52, H01M 4/80, H01M 10/39, H01M 4/02

(54) **SPEICHERELEMENT UND VERFAHREN ZU DESSEN HERSTELLUNG**
STORAGE ELEMENT AND METHOD FOR THE PRODUCTION THEREOF
ÉLÉMENT ACCUMULATEUR ET PROCÉDÉ POUR SA FABRICATION

(30) Priorität: 27.09.2011 DE 102011083539; 26.10.2011 DE 102011085224
(43) Veröffentlichungstag der Anmeldung: 02.04.2014
(73) Patentinhaber: Siemens Aktiengesellschaft, 80333 München (DE)
(72) Erfinder: SCHUH, Carsten, 85598 Baldham (DE); SOLLER, Thomas, 94405 Landau/Isar (DE)
(86) Internationale Anmeldenummer: PCT/EP2012/067107
(87) Internationale Veröffentlichungsnummer: WO 2013/045209

(56) Entgegenhaltungen:
- EP-A1- 1 513 214
- EP-A1- 2 335 807
- EP-B1- 0 721 675

## Beschreibung

Die Erfindung betrifft ein Speicherelement für eine Festelektrolyt-Batterie nach dem Oberbegriff von Patentanspruch 1 sowie ein Verfahren zum Herstellen eines solchen Speicherelements nach dem Oberbegriff von Patentanspruch 10.

Festelektrolyt-Batterien beruhen auf dem Prinzip von Festelektrolyt-Brennstoffzellen, die durch Hinzufügen von Speicherelementen zur Batterie erweitert werden. Diese Speicherelemente bestehen üblicherweise aus keramischen Grundkörpern, in welche Partikel aus einem Metall und/oder einem Metalloxid eingelagert sind, welche zusammen ein Redoxpaar bilden. Im geladenen Zustand der Batterie sind die Partikel dabei zum Metall reduziert. Durch elektrochemische Oxidation mit Luftsauerstoff kann Energie gewonnen werden, die als elektrische Energie an den Abgriffspolen der Batterie entnommen werden kann. Sind die Metallpartikel vollständig zum jeweiligen Metalloxid oxidiert, so ist die Batterie entladen. Um die Batterie neu zu laden, wird nun die Brennstoffzelle im Elektrolysemodus betrieben, wobei Wasserstoff entsteht, der die Metalloxide wieder zum Metall reduziert.

Bei der Fertigung derartiger Batterien stellt sich das Problem, die theoretisch vorhandene Speicherkapazität der Speicherelemente möglichst effektiv auszuschöpfen, sowie eine weitestgehend konstante Entladungscharakteristik im potentio- bzw. im galvanostatischen Betrieb zu ermöglichen. Ferner ist es von großer Bedeutung, die Langzeitstabilität sowohl unter Lade-Entlade-Zyklen als auch im Standby-Betrieb zu gewährleisten.

Von besonderer Bedeutung hierbei ist die Zugänglichkeit der aktiven Metallspezies im Speicherelement für die Redoxreaktion, die insbesondere den Nutzungsgrad sowie die Reaktionskinetik des Lade- und Entladevorgangs wie auch die Degradationsanfälligkeit beeinflusst.

Bislang übliche Speicherelemente besitzen eine isotrope, skelettartige Struktur des keramischen Grundkörpers mit gleichmäßig verteilten offenen bzw. geschlossenen Poren. Um Verlusten der Speicherkapazität durch Versinterung der reaktiven Metallpartikel und einer damit einhergehenden Verringerung der zur Verfügung stehenden aktiven Oberfläche vorzubeugen, werden heutzutage meist sog. ODS-(Oxide dispersion strengthened) - Metallpartikel verwendet, die mit grobkörnigem Zirkondioxid gemischt, trocken gepresst und leicht angesintert werden.
Der vorliegenden Erfindung liegt die Aufgabe zugrunde, ein Speicherelement nach dem Oberbegriff von Patentanspruch 1 sowie ein Verfahren zum Herstellen eines solchen Speicherelements anzugeben, mittels welcher eine Festelektrolyt-Batterie mit besonders guter Stabilität, Kapazität und gleichmäßiger Lade- und Entladekinetik realisiert werden kann.
Diese Aufgabe wird durch ein Speicherelement des Patentanspruchs 1 sowie durch ein Verfahren mit den Merkmalen des Patentanspruchs 7 gelöst.

Ein derartiges Speicherelement für eine Festelektrolyt-Batterie umfasst einen Grundkörper aus einer porösen Matrix gesinterter Keramikpartikel, in welche Partikel aus einem Metall und/oder einem Metalloxid, welche zusammen ein Redoxpaar bilden, eingelagert sind. Erfindungsgemäß ist dabei vorgesehen, dass das Speicherelement entlang einer Vorzugsrichtung einen Konzentrationsgradienten der Partikel aus dem Metall und/oder dem Metalloxid und/oder einen Gradienten einer Porendichte und/oder einer Porengröße aufweist.

Durch eine derartige Variation der aktiven Oberfläche der Partikel aus dem Metall und/oder Metalloxid bzw. der Zugänglichkeit aufgrund einer Variation der Porosität wird insbesondere die Entladungs- und Ladungscharakteristik einer Batterie mit einem derartigen Speicherelement verbessert.

Es ist dabei insbesondere zweckmäßig, wenn die Menge an reaktiven Metallpartikeln mit zunehmender Entfernung zum Elektrolyten der Batterie ansteigt, so dass das diffusionsbedingt verlangsamte Voranschreiten der Redoxreaktion mit zunehmendem Abstand zum Elektrolyten durch ein erhöhtes Angebot an Reaktionspartnern kompensiert wird. Gleichzeitig kann durch eine Variation des Porositätsgrades innerhalb des Speicherelements die Zugänglichkeit über das Volumen des Speicherelements gesteuert werden und so das nutzbare Speichervolumen durch Verringerung der Diffusionswiderstände für eindiffundierende Sauerstoffionen erhöht werden.

Die wechselseitige Separation der in die Keramikmatrix eingebetteten Partikel aus Metall und/oder Metalloxid verhindert zudem deren Versinterung, so dass die Langzeitstabilität und Lebensdauer einer Batterie mit einem solchen Speicherelement verbessert wird.

Hierzu ist es insbesondere vorteilhaft, wenn entlang der Vorzugsrichtung vom Festelektrolyten weg die Konzentration der Partikel aus dem Metall und/oder dem Metalloxid zunimmt und die Porendichte und/oder die Porengröße abnehmen, so dass die oben geschilderten Effekte der mit zunehmendem Abstand zum Elektrolyten erschwerten Eindiffusion der Reaktionsgase besonders gut entgegenwirken können.

Zweckmäßigerweise sind der Konzentrationsgradient und/oder der Gradient der Porendichte und/oder Porengröße Stufengradienten. Derartige Strukturen sind herstellungstechnisch besonders einfach zu realisieren, so dass ein derartiges Speicherelement besonders kostengünstig zu fertigen ist. Erfindungsgemäß weist das Speicherelement eine randständige Metallschicht auf, zu welcher die Vorzugsrichtung eine Flächennormale bildet. Diese ist in Einbaulage des Speicherelements zweckmäßigerweise dem Elektrolyten der Festelektrolyt-Batterie abgewandt. Eine derartige metallische Schicht kann als Opferschicht wirken, die bei Zutritt von molekularem Sauerstoff aus Undichtigkeiten des Zellaufbaus versintert und somit das darunterliegende Nutzspeichervolumen gegen weitere Angriffe versiegelt.

Es ist dabei besonders zweckmäßig, diese Opferschicht beiderseits von Keramikschichten zu umgeben, die zumindest überwiegend frei von Poren und von Partikeln aus dem Metall und/oder dem Metalloxid sind. Diese Schichten wirken als Sperrschichten, die der Eindiffusion von unerwünscht eindringendem molekularem Sauerstoff entgegenwirken können.

Vorzugsweise bestehen die Keramikpartikel aus einem redox-inerten Material, insbesondere aus Al₂O₃, MgO oder ZrO₂. Derartige Keramiken sind gegenüber den Betriebsbedingungen einer Festelektrolyt-Batterie besonders stabil, so dass eine Batterie mit besonders hoher Lebensdauer erreicht wird. Zweckmäßigerweise weisen diese Keramikpartikel eine mediane Korngröße d50 von weniger als 1 µm auf.

Die Partikel aus dem Metall und/oder dem Metalloxid bestehen vorzugsweise aus Eisen, Nickel oder Mangan und/oder den jeweiligen Oxiden. Selbstverständlich können auch beliebige andere, unter den Betriebsbedingungen einer Festelektrolyt-Batterie stabile Metall-Metalloxid-Paare oder sonstige Redoxpaare Anwendung finden. Verglichen mit den Keramikpartikeln weisen die Partikel aus dem Metall und/oder Metalloxid vorzugsweise eine etwas größere mediane Korngröße d50 von 1 bis 10 µm auf. Die kleineren Keramikpartikel können dann die Oberfläche der Partikel aus dem Metall und/oder dem Metalloxid vorzugsweise einlagig überziehen und bilden Abstandselemente, die die Partikel aus dem Metall und/oder dem Metalloxid in der Matrix voneinander trennen, so dass ein Versintern der Metallpartikel untereinander verhindert wird. Dies vermindert die Degradationsneigung des Speicherelements und erhöht damit die Lebensdauer einer Batterie mit einem derartigen Speicherelement.

Die Erfindung betrifft ferner ein Verfahren zum Herstellen eines Speicherelements für eine Festelektrolyt-Batterie, bei welchem ein erster Schlicker aus Keramikpartikeln und Partikeln aus einem Metall und/oder Metalloxid, welche zusammen ein Redoxpaar bilden, sowie einem Porenbildner bereitgestellt und zu einem Grünkörper geformt wird, welcher anschließend gesintert wird.

Erfindungsgemäß ist dabei vorgesehen, dass wenigstens ein weiterer Schlicker aus Keramikpartikeln und Partikeln aus dem Metall und/oder Metalloxid sowie einem Porenbildner bereitgestellt wird, welcher sich im Anteil an Porenbildnern und/oder im Anteil an Metall und/oder Metalloxid von dem ersten Schlicker unterscheidet. Ein Teilbereich des Grünkörpers wird dabei aus dem ersten Schlicker und wenigstens ein weiterer Teilbereich des Grünkörpers aus dem wenigstens einen weiteren Schlicker geformt.

Hierdurch wird es ermöglicht, unterschiedliche Teilbereiche des Grünkörpers - und damit des fertigen Speicherelements - mit unterschiedlichen physikalischen Eigenschaften zu versehen. Insbesondere wenn eine Mehrzahl von verschiedenen Schlickern, die sich graduell im Anteil oder in der Größe von Porenbildnern und/oder im Anteil der Partikel aus dem Metall und/oder Metalloxid unterscheiden, verwendet wird, ist es möglich, einen Grünkörper und damit ein Speicherelement mit entsprechenden Eigenschaftsgradienten aufzubauen, so dass die anhand des erfindungsgemäßen Speicherelements erläuterten Vorteile erzielt werden können.

In einer besonders bevorzugten Ausführungsform der Erfindung wird zum Formen des Grünkörpers zunächst durch Foliengießen des ersten Schlickers eine erste Grünfolie auf einem Träger hergestellt. Anschließend wird durch Foliengießen des wenigstens einen weiteren Schlickers wenigstens eine weitere Grünfolie auf einem Träger gefertigt. Die Grünfolien werden anschließend von den jeweiligen Trägern abgezogen und eine Mehrzahl von Grünfolienabschnitten zum Grünkörper gestapelt, anschließend laminiert und entbindert. Ein erster Teilbereich des Grünkörpers wird durch Stapeln von Folienabschnitten der ersten Grünfolie und wenigstens ein weiterer Teilbereich des Grünkörpers des Stapelns von Folienabschnitten der zweiten Grünfolie gebildet.

Durch die Verwendung des Foliengießens zum Aufbau dünner Grünfolien und anschließendes Stapeln derselben kann eine besonders fein abgestufte Veränderung der Eigenschaften des Grünkörpers über dessen Volumen hinweg erzielt werden. Im Extremfall wird für jede einzelne Folienlage eine eigene Grünfolie mit eigenen Eigenschaften eingesetzt, so dass sich beinahe stufenlose Gradienten der Porendichte, Porengröße oder Metallkonzentration im fertigen Speicherelement realisieren lassen. Das Foliengießen ist zudem ein besonders zuverlässiges und kostengünstiges - und damit großserienfähiges - Herstellungsverfahren, mit dem auch dünnste Folien, beispielsweise im µm-Bereich, gefertigt werden können.

In weiterer Ausgestaltung der Erfindung werden insgesamt drei Grünfolien aus jeweils zugeordnetem Schlickern hergestellt. Der erste Schlicker umfasst dabei 50 Vol.% an Metall und/oder Metalloxid und 10 Vol.% Porenbildner, der zweite Schlicker 35 Vol.% an Metall und/oder Metalloxid und 20 Vol.% Porenbildner und der dritte Schlicker 20 Vol.% an Metall und/oder Metalloxid und 30 Vol.% Porenbildner, wobei der Rest der Schlicker jeweils von Keramikpartikeln gebildet ist.

Damit lässt sich auf einfachste Weise ein Stufengradient der Porendichte und Metallkonzentration im Grünkörper aufbauen, der bereits ausreicht, um die anhand des erfindungsgemäßen Speicherelements geschilderten Vorteile zu erzielen.

Zum Aufbau des eigentlichen Grünkörpers wird dabei zunächst eine Mehrzahl von Folien in Abschnitten der ersten Grünfolie gefolgt von einer Mehrzahl von Folienabschnitten der zweiten Grünfolie gefolgt von einer Mehrzahl von Folienabschnitten der dritten Grünfolie gestapelt.

Um einen weiter verbesserten Speicher zu erhalten, kann vorteilhafterweise zusätzlich ein Keramikschlicker, dessen Partikelbestandteile ausschließlich Keramikpartikel umfassen, sowie ein Metallschlicker, dessen Partikelbestandteile ausschließlich Partikel aus dem Metall umfassen, bereitgestellt werden, und entsprechende Grünfolien aus den Schlickern hergestellt werden.

Nach Formen des Grünkörpers aus der ersten und der wenigstens einen weiteren Grünfolie wird dann zusätzlich eine Mehrzahl von Folienabschnitten der aus dem Keramikschlicker hergestellten Grünfolie gefolgt von einer Mehrzahl von Folienabschnitten der aus dem Metallschlicker hergestellten Grünfolie, gefolgt von einer Mehrzahl von Folienabschnitten der aus dem Keramikschlicker hergestellten Grünfolie auf dem Grünkörper gestapelt. Nach dem Entbindern und Sintern eines derartigen Grünkörpers ergibt sich damit ein Speicherelement, welches an einer Grenzfläche eine Schichtabfolge aus einer rein keramischen Schicht gefolgt von einer rein metallischen Schicht gefolgt von einer weiteren rein keramischen Schicht zeigt. Dies ist die bereits anhand des erfindungsgemäßen Speicherelements geschilderte Kombination aus Sperr- und Opferschichten, die das Speicherelement gegen das Eindringen von molekularem Sauerstoff stabilisieren.

Vorzugsweise werden Keramikpartikel aus einem Redox-inerten Material, insbesondere aus Al₂O₃, MgO oder ZrO₂ mit einer medianen Korngröße d50 von weniger als 1 µm verwendet. Als Partikel aus dem Metall und/oder dem Metalloxid werden bevorzugt Partikel aus Eisen, Nickel oder Mangan und/oder den jeweiligen Oxiden mit einer medianen Korngröße d50 von 1 bis 10 µm verwendet, so dass die oben geschilderte Matrix von separierten Metallpartikeln in Keramikeinbettung entsteht, die eine äußerst geringe Neigung zu weiterer Versinterung unter den Betriebsbedingungen einer Festelektrolyt-Batterie aufweist.

Als Porenbildner können Naturfasern, Kohlenstoffpartikel oder Cellulosepartikel mit einer medianen Korngröße d50 von 10 bis 50 µm verwendet werden. Diese Partikel können beim Sintern des Grünkörpers praktisch rückstandsfrei verbrennen bzw. pyrolysieren und damit die gewünschten Poren erzeugen, ohne die Matrix des Speicherelements zu kontaminieren.

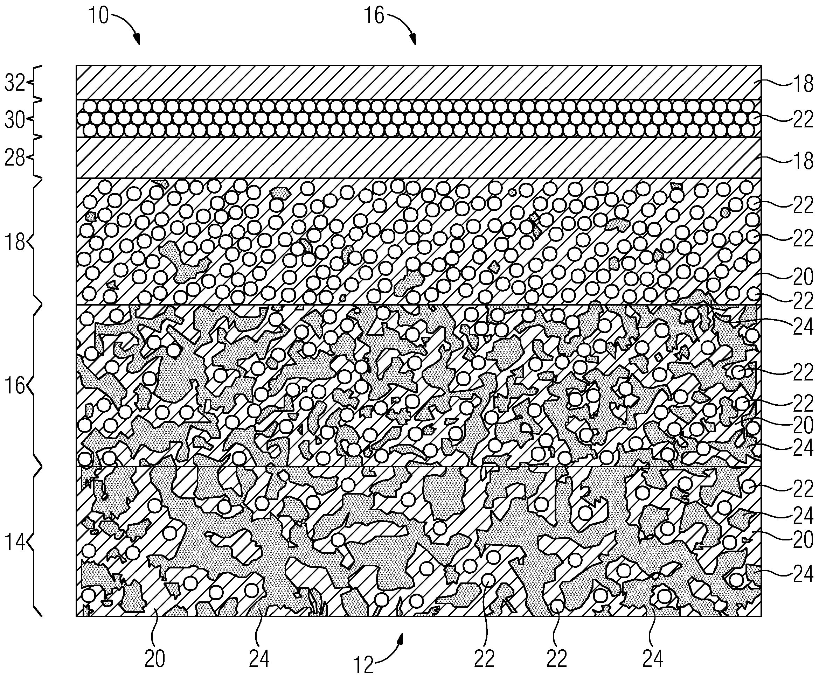

Im Folgenden werden die Erfindung und ihre Ausführungsformen anhand der Zeichnung näher erläutert. Die einzige Figur zeigt hierbei eine schematische Querschnittsdarstellung durch ein Ausführungsbeispiel eines erfindungsgemäßen Speicherelements für eine Festelektrolyt-Batterie.

Ein im Ganzen mit 10 bezeichnetes Speicherelement für eine Festelektrolyt-Batterie weist einen mehrschichtigen Aufbau auf. Ausgehend von der im Einbauzustand des Speicherelements 10 dem Elektrolyten zugewandten Seite 12 folgen zunächst drei Schichten 14, 16, 18 aufeinander, die jeweils eine keramische Matrix 20 mit eingebetteten Metallpartikeln 22 aufweisen, wobei die Metallpartikel 22 der Übersichtlichkeit halber nicht alle bezeichnet sind. Ferner weisen die Schichten 14, 16, 18 Poren 24 auf, die ebenfalls nicht alle bezeichnet sind.

Wie aus der Figur zu erkennen ist, nimmt die Dichte der Metallpartikel 22 mit zunehmendem Abstand von der dem Elektrolyten zugewandten Seite 12 zu, während gleichzeitig Größe und Anzahl der Poren 24 abnimmt. Durch den Gradienten der Porendichte kann der Diffusionswiderstand für aus dem Elektrolyten in das Speicherelement 10 eindringende Sauerstoffionen gesteuert werden. Dies ist von Bedeutung, da die Reaktion dieser Sauerstoffionen mit Metallpartikeln 22 der grundlegende Mechanismus der Energiefreisetzung im Speicherelement 10 ist. Durch elektrochemische Oxidation der Metallpartikel 22 mit den Sauerstoffionen wird Energie erzeugt, die an den Elektroden einer Festelektrolyt-Batterie mit einem derartigen Speicherelement 10 abgezogen werden kann. Durch die entsprechende Steuerung der Diffusionswiderstände mittels der Porengrößengradienten über die Schichten 14 bis 18 wird die Verfügbarkeit der Metallpartikel 22 für die Reaktion deutlich verbessert.

Die Zunahme der Dichte der Metallpartikel 22 in den Schichten 14 bis 18 kompensiert ferner das diffusionsbedingt verlangsamte Voranschreiten der Redoxreaktion mit vergrößertem Abstand zum Elektrolyten. Hierdurch kann eine Linearisierung der Lade- bzw. Entladecharakteristik einer Festelektrolyt-Batterie mit einem derartigen Speicherelement 10 erzielt werden.

Auf der dem Elektrolyten abgewandten Seite 26 des Speicherelements schließt sich an die Schicht 18 zunächst eine Vollkeramikschicht 28, dann eine voll metallische Schicht 30 und wieder eine Vollkeramikschicht 32 an. Die Vollkeramikschichten 28 und 32 bilden eine Diffusionsbarriere für molekularen Sauerstoff, der bei Undichtigkeiten im Batteriegehäuse eindringen könnte. Sollten molekulare Sauerstoffspezies dennoch die äußere Barriere 32 durchdringen können, so oxidieren sie die vollmetallische Schicht 30 und führen damit zu einem Zusammensintern der darin enthaltenen Metallpartikel 22. Dies blockiert die weitere Diffusion von nachfolgenden Sauerstoffmolekülen. Hierdurch wird eine Beschädigung der eigentlich reaktiven Sichten 14 bis 18 beim Eindringen geringer Mengen molekularen Sauerstoffs vermieden, so dass das Speicherelement 10 besonders stabil ist und eine hohe Lebensdauer aufweist.

Weiter zur Stabilität des Speicherelements 10 trägt die Separation der Metallpartikel 22 in der Keramikmatrix 20 bei, die ein Zusammensintern der Metallpartikel 22 im Betrieb des Speicherelements 10 verhindert und damit die hohe reaktive Oberfläche des Speicherelements 10 aufrechterhält.

Zur Herstellung eines derartigen Speicherelements wird zunächst für jede der Schichten 14 bis 18 sowie 28 bis 32 ein eigener Schlicker bereitgestellt. Für die Schichten 28 bis 32, die vollkeramisch aufgebaut sind, besteht der Schlicker dabei zu 100% aus Matrixmaterial, vorzugsweise von Aluminiumoxid-, Magnesiumoxid- oder Zirkonoxid-Partikeln mit einer medianen Korngröße d50 von weniger als 1 µm. Die rein metallische Schicht 30 wird aus redox-aktiven Metallpartikeln, beispielsweise Eisen, Nickel oder Mangan mit einer medianen Korngröße d50 von 1 bis 10 µm gebildet.

Für die später die Schichten 14 bis 18 bildenden Schlicker werden Keramikpartikel, Metallpartikel und zusätzliche Porenbildner eingesetzt. Der Schlicker zum Aufbau der Schicht 14 besteht aus 5 bis 20 Vol.% Metallpartikeln, 20 bis 30 Vol.% Porenbildnern und einen Rest aus Keramikpartikeln. Der Schlicker für die Schicht 6 umfasst 20 bis 35 Vol.% Metallpartikel, 10 bis 20 Vol.% Porenbildner und ebenfalls als Rest Keramikpartikel. Der Schlicker für die Schicht 18 umfasst schließlich 35 bis 50 Vol.% Metallpartikel, 0 bis 10 Vol.% Porenbildner und als Rest ebenfalls keramische Matrix. Als Porenbildner können dabei Naturfasern, Kohlenstoff- oder Glaskohlenstoffpartikel oder Cellulosekugeln mit einem d50 von 10 bis 50 µm eingesetzt werden.

Aus den jeweiligen Schlickern werden zunächst im Foliengussverfahren entsprechende Grünfolien auf einem Träger hergestellt. Nach Abziehen des Trägers können diese in Abschnitte geschnitten werden. Zum Herstellen des Speicherelements 10 wird dann zunächst ein Grünkörper gebildet. Hierzu werden zunächst die aus dem Schlicker zum Aufbau der Schicht 14 gebildeten Folienabschnitte auf die gewünschte Höhe gestapelt gefolgt von Folienabschnitten aus dem zum Aufbau der Schicht 16 gebildeten Grünfolien, gefolgt von Folienabschnitten der aus dem Schlicker zum Aufbau der Schicht 18 gefertigte Grünfolien.

Auf dieses zur gewünschten Höhe gestapelte Folienpaket wird dann eine Zahl rein keramischer Folien gefolgt von einer Zahl rein metallischer Folien gefolgt von einer weiteren Zahl rein keramischer Folien gestapelt, um die Schichten 28 bis 32 aufzubauen. Der fertige Folienstapel wird laminiert und entbindert und schließlich bei geeigneten Temperaturen gesintert, um das Speicherelement 10 zu erhalten. Auf diese Weise kann besonders einfach ein strukturierter Speicherkörper hergestellt werden, der die gewünschten Gradienten an Porendichte, Porengröße und Metallkonzentration aufweist und einseitig durch Sperr- und Opferschichten geschützt wird.

## Patentansprüche

1. Speicherelement (10) für eine Festelektrolyt-Batterie, mit einem Grundkörper aus einer porösen Matrix (20) gesinterter Keramikpartikel, in welche Partikel (22) aus einem Metall und/oder einem Metalloxid, welche zusammen ein Redoxpaar bilden, eingelagert sind, wobei das Speicherelement (10) entlang einer Vorzugsrichtung einen Konzentrationsgradienten der Partikel (22) aus dem Metall und/oder dem Metalloxid und/oder einen Gradienten einer Porendichte und/oder einer Porengröße aufweist, wobei entlang der Vorzugsrichtung die Konzentration der Partikel (22) aus dem Metall und/oder dem Metalloxid zunimmt und die Porendichte und/oder die Porengröße abnehmen, wobei
das Speicherelement (10) eine randständige Metallschicht (30) aufweist, zu welcher die Vorzugsrichtung eine Flächennormale bildet, **dadurch gekennzeichnet, dass** die randständige Metallschicht (30) beiderseits von Keramikschichten (28) umgeben ist, die zumindest überwiegend frei von Poren (24) und von Partikeln (22) aus dem Metall und/oder dem Metalloxid sind.

2. Speicherelement (10) nach Anspruch 1,
**dadurch gekennzeichnet, dass**
der Konzentrationsgradient und/oder der Gradient der Porendichte und/oder Porengröße Stufengradienten sind.

3. Speicherelement (10) nach einem der Ansprüche 1 oder 2,
**dadurch gekennzeichnet, dass**
die Keramikpartikel aus einem redox-inerten Material, insbesondere aus Al₂O₃, MgO oder ZrO₂ bestehen.

4. Speicherelement (10) nach einem der vorstehenden Ansprüche,
**dadurch gekennzeichnet, dass**
die Keramikpartikel eine mediane Korngröße d50 von weniger als 1 µm aufweisen.

5. Speicherelement (10) nach einem der vorstehenden Ansprüche,
**dadurch gekennzeichnet, dass**
die Partikel (22) aus dem Metall und/oder dem Metalloxid aus Fe, Ni oder Mn und/oder den jeweiligen Oxiden bestehen.

6. Speicherelement (10) nach einem der vorstehenden Ansprüche,
**dadurch gekennzeichnet, dass**
die Partikel (22) aus dem Metall und/oder dem Metalloxid eine mediane Korngröße d50 von 1 bis 10 µm aufweisen.

7. Verfahren zum Herstellen eines Speicherelements (10) nach einem der Ansprüche 1 bis 6, bei welchem ein erster Schlicker aus Keramikpartikeln und Partikeln (22) aus einem Metall und/oder einem Metalloxid, welche zusammen ein Redoxpaar bilden, sowie einem Porenbildner bereitgestellt und zu einem Grünkörper geformt wird, welcher anschließend gesintert wird,
**dadurch gekennzeichnet, dass**
wenigstens ein weiterer Schlicker aus Keramikpartikeln und Partikeln (22) aus dem Metall und/oder dem Metalloxid sowie einem Porenbildner bereitgestellt wird, welcher sich im Anteil an Porenbildnern und/oder im Anteil an Metall und/oder Metalloxid von dem ersten Schlicker unterscheidet, wobei ein Teilbereich des Grünkörpers aus dem ersten Schlicker und zumindest ein Teilbereich des Grünkörpers aus dem wenigstens einen weiteren Schlicker geformt wird.

8. Verfahren nach Anspruch 7,
**dadurch gekennzeichnet, dass**
zum Formen des Grünkörpers zunächst durch Foliengießen des ersten Schlickers eine erste Grünfolie auf einem Träger hergestellt und durch Foliengießen des wenigstens einen weiteren Schlickers wenigstens eine weitere Grünfolie auf einem Träger hergestellt wird, anschließend die jeweiligen Träger abgezogen werden und eine Mehrzahl von Grünfolienabschnitten zum Grünkörper gestapelt und anschließend laminiert und entbindert wird, wobei ein erster Teilbereich des Grünkörpers durch Stapeln von Folienabschnitten der ersten Grünfolie und wenigstens ein weiterer Teilbereich des Grünkörpers durch Stapeln von Folienabschnitten der zweiten Grünfolie gebildet wird.

9. Verfahren nach Anspruch 8,
**dadurch gekennzeichnet, dass**
insgesamt drei Grünfolien aus jeweils zugeordneten Schlickern hergestellt werden.

10. Verfahren nach Anspruch 9,
**dadurch gekennzeichnet, dass**
der erste Schlicker 50 Vol.% an Metall und/oder Metalloxid und 10 Vol.% Porenbildner, der zweite Schlicker 35 Vol.% an Metall und/oder Metalloxid und 20 Vol.% Porenbildner und der dritte Schlicker 20 Vol.% an Metall und/oder Metalloxid und 30 Vol.% Porenbildner enthält, wobei der Rest der Schlicker jeweils von Keramikpartikeln gebildet ist.

11. Verfahren nach Anspruch 10,
**dadurch gekennzeichnet, dass**
zum Formen des Grünkörpers zunächst eine Mehrzahl von Folienabschnitten der ersten Grünfolie gefolgt von einer Mehrzahl von Folienabschnitten der zweiten Grünfolie gefolgt von einer Mehrzahl von Folienabschnitten der dritten Grünfolie gestapelt werden.

12. Verfahren nach einem der Ansprüche 9 bis 11,
**dadurch gekennzeichnet, dass**
zusätzlich ein Keramikschlicker, dessen Partikelbestandteile ausschließlich Keramikpartikel umfassen, sowie ein Metallschlicker, dessen Partikelbestandteile ausschließlich Partikel aus dem Metall umfassen bereitgestellt wird, und entsprechende Grünfolien aus den Schlickern hergestellt werden.

13. Verfahren nach Anspruch 12,
**dadurch gekennzeichnet dass**
nach Formen des Grünkörpers aus der ersten und der wenigstens einen weiteren Grünfolie zusätzlich eine Mehrzahl von Folienabschnitten der aus dem Keramikschlicker hergestellten Grünfolie, gefolgt von einer Mehrzahl von Folienabschnitten der aus dem Metallschlicker hergestellten Grünfolie, gefolgt von einer Mehrzahl von Folienabschnitten der aus dem Keramikschlicker hergestellten Grünfolie auf den Grünkörper gestapelt werden.

14. Verfahren nach einem der Ansprüche 8 bis 13,
**dadurch gekennzeichnet, dass**
Keramikpartikel aus einem redox-inerten Material, insbesondere aus Al₂O₃, MgO oder ZrO₂ mit einer medianen Korngröße d50 von weniger als 1 µm verwendet werden.

15. Verfahren nach einem der Ansprüche 8 bis 14,
**dadurch gekennzeichnet, dass**
als Partikel (22) aus dem Metall und/oder dem Metalloxid Partikel aus Fe, Ni oder Mn und/oder den jeweiligen Oxiden mit einer medianen Korngröße d50 von 1 bis 10 µm verwendet werden.

16. Verfahren nach einem der Ansprüche 8 bis 15,
**dadurch gekennzeichnet, dass**
als Porenbildner Naturfasern, Kohlenstoffpartikel oder Cellulosepartikel mit einer medianen Korngröße d50 von 10 bis 50 µm verwendet werden.

## Claims

1. Storage element (10) for a solid electrolyte battery, having a base body consisting of a porous matrix (20) of sintered ceramic particles, in which particles (22) of a metal and/or a metal oxide, which together form a redox pair, are incorporated,
wherein
along a preferred direction, the storage element (10) has a concentration gradient of the particles (22) of the metal and/or the metal oxide, and/or a gradient of a pore density and/or a pore size, wherein along the preferred direction, the concentration of the particles (22) of the metal and/or the metal oxide increases and the pore density and/or the pore size decrease, wherein
the storage element (10) has a peripheral metal layer (30), to which the preferred direction forms a surface normal, **characterized in that**
the peripheral metal layer (30) is surrounded on both sides with ceramic layers (28) which are at least predominantly free of pores (24) and of particles (22) of the metal and/or the metal oxide.

2. Storage element (10) according to Claim 1,
**characterized in that**
the concentration gradient and/or the gradient of the pore density and/or pore size are stepped gradients.

3. Storage element (10) according to one of Claims 1 and 2,
**characterized in that**
the ceramic particles consist of a redox-inert material, in particular of Al₂O₃, MgO or ZrO₂.

4. Storage element (10) according to one of the preceding claims,
**characterized in that**
the ceramic particles have a median particle size d50 of less than 1 µm.

5. Storage element (10) according to one of the preceding claims,
**characterized in that**
the particles (22) of the metal and/or the metal oxide consist of Fe, Ni or Mn and/or the respective oxides.

6. Storage element (10) according to one of the preceding claims,
**characterized in that**
the particles (22) of the metal and/or the metal oxide have a median particle size d50 of from 1 to 10 µm.

7. Method for the production of a storage element (10) according to one of Claims 1 to 6, in which a first slip of ceramic particles and particles (22) of a metal and/or a metal oxide, which together form a redox pair, as well as a pore forming agent, are provided and shaped to form a green body which is subsequently sintered,
**characterized in that**
at least one further slip of ceramic particles and particles (22) of the metal and/or the metal oxide, as well as a pore forming agent, are provided, which differs from the first slip in the proportion of pore forming agents and/or in the proportion of metal and/or metal oxide, one subregion of the green body being formed from the first slip and at least one subregion of the green body being formed from the at least one further slip.

8. Method according to Claim 7,
**characterized in that**
in order to form the green body, a first green sheet is initially produced on a support by sheet casting of the first slip, and at least one further green sheet is produced on a support by sheet casting of the at least one further slip, the respective supports are subsequently removed and a multiplicity of green sheet sections are stacked to form the green body and subsequently laminated and debindered, a first subregion of the green body being formed by stacking sheet sections of the first green sheet and at least one further subregion of the green body being formed by stacking sheet sections of the second green sheet.

9. Method according to Claim 8,
**characterized in that**
in total three green sheets are formed from respectively assigned slips.

10. Method according to Claim 9,
**characterized in that**
the first slip contains 50 vol% of metal and/or metal oxide and 10 vol% of pore forming agent, the second slip contains 35 vol% of metal and/or metal oxide and 20 vol% of pore forming agent, and the third slip contains 20 vol% of metal and/or metal oxide and 30 vol% of pore forming agent, the remainder of the slips respectively being formed by ceramic particles.

11. Method according to Claim 10,
**characterized in that**
in order to form the green body, first a multiplicity of sheet sections of the first green sheet followed by a multiplicity of sheet sections of the second green sheet, followed by a multiplicity of sheet sections of the third green sheet are stacked.

12. Method according to one of Claims 9 to 11,
**characterized in that**
a ceramic slip, the particle constituents of which exclusively comprise ceramic particles, and a metal slip, the particle constituents of which exclusively comprise particles of the metal, are additionally provided, and corresponding green sheets are produced from the slips.

13. Method according to Claim 12,
**characterized in that**
after formation of the green body from the first and the at least one further green sheet, a multiplicity of sheet sections of the green sheet produced from the ceramic slip, followed by a multiplicity of sheet sections of the green sheet produced from the metal slip, followed by a multiplicity of sheet sections of the green sheet produced from the ceramic slip, are additionally stacked on the green body.

14. Method according to one of Claims 8 to 13,
**characterized in that**
ceramic particles consisting of a redox-inert material, in particular of Al₂O₃, MgO or ZrO₂, having a median particle size d50 of less than 1 µm, are used.

15. Method according to one of Claims 8 to 14,
**characterized in that**
particles of Fe, Ni or Mn and/or the respective oxides, with a median particle size d50 of from 1 to 10 µm, are used as particles (22) of the metal and/or the metal oxide.

16. Method according to one of Claims 8 to 15,
**characterized in that**
natural fibers, carbon particles or cellulose particles, having a median particle size d50 of from 10 to 50 µm, are used as pore forming agents.

## Revendications

1. Élément accumulateur (10) pour batterie à électrolyte solide avec corps de base constitué d'une matrice poreuse (20) de particules de céramique frittées, dans lesquelles des particules (22) de métal et/ou d'oxyde de métal, qui forment ensemble un couple redox, sont stockées,
l'élément accumulateur (10)
présentant, dans une orientation préférentielle, un gradient de concentration des particules (22) de métal et/ou d'oxyde de métal et/ou un gradient d'une densité de pores et/ou d'une grosseur de pores, sur l'orientation préférentielle la concentration des particules (22) de métal et/ou de l'oxyde métallique s'accroissant et la densité de pores et/ou la grosseur de pores diminuant,
l'élément accumulateur (10) présentant une couche de métal marginale (30), par rapport à laquelle l'orientation préférentielle forme une normale de surface, **caractérisé en ce que** la couche de métal marginale (30) est entourée des deux côtés par des couches céramiques (28), lesquelles sont au moins en grande partie exemptes de pores (24) et de particules (22) de métal et/ou d'oxyde de métal.

2. Élément accumulateur (10) selon la revendication 1
**caractérisé en ce que**
le gradient de concentration et/ou le gradient de densité de pores et/ou de la grosseur de pores sont des gradients discontinus.

3. Élément accumulateur (10) selon l'une des revendications 1 ou 2, **caractérisé en ce que**
les particules de céramique sont composées d'un matériau à inertie redox, en particulier d'Al₂O₃, de MgO ou de ZrO₂.

4. Élément accumulateur (10) selon l'une des revendications précédentes,
**caractérisé en ce que** les particules de céramique présentent une granulométrie médiane d50 inférieure à 1 µm.

5. Élément accumulateur (10) selon l'une des revendications précédentes,
**caractérisé en ce que**
les particules (22) de métal et/ou d'oxyde de métal sont constituées de Fe, de Ni ou de Mn et/ou des oxydes respectifs.

6. Élément accumulateur (10) selon l'une des revendications précédentes,
**caractérisé en ce que**
les particules (22) de métal et/ou d'oxyde de métal présentent une granulométrie médiane d50 allant de 1 à 10 µm.

7. Procédé de fabrication d'un élément accumulateur (10) selon l'une des revendications 1 à 6, dans lequel une première barbotine de particules de céramique et de particules (22) de métal et/ou d'oxyde de métal, lesquelles forment ensemble un couple redox, ainsi que d'un agent porogène sont procurés et mis en forme en compact vert, lequel est ensuite fritté,
**caractérisé en ce que**
au moins une autre barbotine de particules de céramique et de particules (22) de métal et/ou d'oxyde de métal ainsi que d'un agent porogène est procuré, laquelle se distingue au niveau de la teneur en agent porogène et/ou de la teneur en métal et/ou oxyde de métal de la première barbotine, une partie du compact vert étant mise en forme à partir de la première barbotine et au moins une partie du compact vert l'étant à partir de la au moins une autre barbotine.

8. Procédé selon la revendication 7,
**caractérisé en ce que**
pour la mise en forme du compact vert, on fabrique d'abord par coulage de feuille de la première barbotine, une première feuille verte sur un support et, par coulage de feuille de la au moins une autre barbotine, on fabrique au moins une autre feuille verte sur un support, ensuite, les supports respectifs sont retirés et une pluralité de sections de feuilles vertes sont empilées en compact vert, puis laminées et libérées du liant, une première partie du compact vert étant formée par empilement de sections de feuilles de la première feuille verte et au moins une autre partie du compact vert étant formée par empilement de sections de feuilles de la deuxième feuille verte.

9. Procédé selon la revendication 8,
**caractérisé en ce que**
en tout, trois feuilles vertes sont fabriquées à partir respectivement de barbotines associées.

10. Procédé selon la revendication 9,
**caractérisé en ce que**
la première barbotine contient 50% en volume de métal et/ou d'oxyde de métal et 10% en volume d'agent porogène, la deuxième barbotine contient 35% en volume de métal et/ou d'oxyde de métal et 20% en volume d'agent porogène et la troisième barbotine contient 20% en volume de métal et/ou d'oxyde de métal et 30% en volume d'agent porogène, le restant des barbotines étant formé respectivement de particules de céramique.

11. Procédé selon la revendication 10,
**caractérisé en ce que**
pour la mise en forme du compact vert, on empile d'abord une pluralité de sections de feuilles de la première feuille verte suivie d'une pluralité de sections de feuilles de la deuxième feuille verte, suivie d'une pluralité de sections de feuilles de la troisième feuille verte.

12. Procédé selon l'une des revendications 9 à 11,
**caractérisé en ce que**
on procure en outre une barbotine de céramique dont les constituants de particules comprennent exclusivement des particules de céramique, ainsi qu'une barbotine de métal dont les constituants de particules comprennent exclusivement des particules de métal, et on fabrique les feuilles vertes correspondantes à partir des barbotines.

13. Procédé selon la revendication 12,
**caractérisé en ce que**
on empile en outre sur le compact vert, après le formage du compact vert à partir de la première et de la au moins une autre feuille verte, une pluralité de sections de feuilles de la feuille verte fabriquée à partir de la barbotine de céramique, suivie d'une pluralité de sections de feuilles de la feuille verte fabriquée à partir de la barbotine de métal, suivie d'une pluralité de sections de feuilles de la feuille verte fabriquée à partir de la barbotine de céramique.

14. Procédé selon l'une des revendications 8 à 13,
**caractérisé en ce que**
on utilise des particules de céramique d'un matériau à inertie redox, en particulier d'Al₂O₃, de MgO ou de ZrO₂, avec une granulométrie médiane d50 inférieure à 1 µm.

15. Procédé selon l'une des revendications 8 à 14,
**caractérisé en ce que**
on utilise comme particules (22) de métal et/ou d'oxyde de métal des particules de Fe, de Ni ou de Mn et/ou des oxydes respectifs présentant une granulométrie médiane d50 allant de 1 à 10 µm.

16. Procédé selon l'une des revendications 8 à 15,
**caractérisé en ce que**
on utilise comme agent porogène des fibres naturelles, des particules de carbone ou des particules de cellulose présentant une granulométrie médiane d50 de 10 à 50 µm.
